# EUROPEAN PATENT APPLICATION

(11) **EP 1 662 494 A2**
(43) Date of publication of application: **31.05.2006**
(21) Application number: 05107834.3
(22) Date of filing: 26.08.2005
(51) Int. Cl.: G11B 7/007

(54) **Information storage medium, stamper, disc apparatus, and management information playback method**

(30) Priority: 30.11.2004 JP 2004347156
(71) Applicant: Kabushi Kaisha Toshiba, Tokyo 105-8001 (JP)
(72) Inventor: OOTERA, Yasuaki, c/o Toshiba Corporation, 105-8001, Tokyo (JP); TAKAZAWA, Koji, c/o Toshiba Corporation, 105-8001, Tokyo (JP); MORISHITA, Naoki, c/o Toshiba Corporation, 105-8001, Tokyo (JP); MORITA, Seiji, c/o Toshiba Corporation, 105-8001, Tokyo (JP); NAKAMURA, Naomasa, c/o Toshiba Corporation, 105-8001, Tokyo (JP); OGAWA, Akihito, c/o Toshiba Corporation, 105-8001, Tokyo (JP)
(74) Representative: Henkel, Feiler & Hänzel

(57) **Abstract**

An information storage medium according to an embodiment of the invention includes a concentric management information area (1). The management information area has a plurality of bar-like patterns (10) in a circumferential direction which include an aggregate of a plurality of grooves (11) or marks (12) aligned in a radial direction. The plurality of bar-like patterns aligned in the circumferential direction form management information.

## Description

### BACKGROUND OF THE INVENTION

The present invention relates to a disc-like information storage medium such as a DVD-ROM, DVD-R, DVD-RW, or DVD-RAM. The present invention also relates to a stamper for forming a disc-like information storage medium by press-molding. The present invention also relates to a disc apparatus and management information playback method for playing back management information from a plurality of grooves formed in a concentric management information area or a plurality of marks recorded in the concentric management information area.

An optical disc such as a DVD has a region called a BCA (Burst Cutting Area) in which a barcode pattern is recorded. For example, in Jpn. Pat. KOKAI Appln. No. 2004-152429, a technique of recording the barcode pattern on the disc upon synchronizing a modulation signal corresponding to the barcode pattern with a signal from a disc rotating motor. In order to play back a next-generation optical disc whose recording density is higher than that of a current-generation optical disc, a light beam having a beam spot diameter smaller than that for playing back the current-generation optical disc is used. That is, when a large BCA pattern applied to the current-generation optical disc is directly applied to the next-generation optical disc, the following problem arises. The beam spot diameter for playing back the next-generation optical disc is extremely smaller than the size of the BCA pattern on the current-generation optical disc. Hence, when the large BCA pattern applied to the current-generation optical disc is to be played back using the light beam with the extremely small beam spot diameter applied to the next-generation optical disc, the distortion of a playback signal from the BCA pattern occurs. That is, the BCA pattern cannot be correctly played back.

### BRIEF SUMMARY OF THE INVENTION

It is an object of the present invention to provide an information storage medium including a BCA pattern (management information) adaptable to a fine beam spot. It is another object of the present invention to provide a stamper capable of forming, by press-molding, an information storage medium which includes a BCA pattern (management information) adaptable to a fine beam spot. It is still another object of the present invention is to provide a disc apparatus and management information playback method which can correctly play back a BCA pattern (management information) using a fine beam spot.

According to an embodiment of the invention, there is provided an information storage medium comprising a concentric management information area, wherein the management information area has a plurality of bar-like patterns in a circumferential direction which include an aggregate of a plurality of grooves or a plurality of marks aligned in a radial direction, and the plurality of bar-like patterns aligned in the circumferential direction form management information.

According to another embodiment of the invention, there is provided an information storage medium comprising a concentric management information area, wherein the management information area has a plurality of bar-like patterns in a circumferential direction which include an aggregate of a plurality of marks aligned in a radial direction and a circumferential direction, and the plurality of bar-like patterns aligned in the circumferential direction form management information.

According to still another embodiment of the invention, there is provided a stamper comprising a management information stamp area to form a concentric management information area by press-molding, wherein the management information stamp area has a plurality of bar-like patterns in a circumferential direction which include an aggregate of a plurality of grooves aligned in a radial direction, and the plurality of bar-like patterns aligned in the circumferential direction form management information.

According to still another embodiment of the invention, there is provided a disc apparatus which plays back management information from a disc-like information storage medium having a management information area which includes a plurality of bar-like patterns in a circumferential direction each having an aggregate of a plurality of grooves or a plurality of marks in a radial direction, the plurality of bar-like patterns aligned in the circumferential direction forming the management information, comprising an irradiation unit configured to irradiate the management information area with a light beam, and a playback unit configured to play back the management information on the basis of reflected light of the light beam applied from the irradiation unit.

According to still another embodiment of the invention, there is provided a management information playback method for playing back management information from a disc-like information storage medium having a management information area which includes a plurality of bar-like patterns in a circumferential direction each having an aggregate of a plurality of grooves or a plurality of marks in a radial direction, the plurality of bar-like patterns aligned in the circumferential direction forming the management information, comprising irradiating the management information area with a light beam, detecting reflected light of the applied light beam, and playing back the management information on the basis of a detected detection signal.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

For purposes of summarizing the invention, certain aspects, advantages, and novel features of the invention have been described herein. It is to be understood that not necessarily all such advantages may be achieved in accordance with any particular embodiment of the invention. Thus, the invention may be embodied or carried out in a manner that achieves or optimizes one advantage or group of advantages as taught herein without necessarily achieving other advantages as may be taught or suggested herein.

### BRIEF DESCRIPTION OF THE SEVERAL VIEWS OF THE DRAWING

The accompanying drawings, which are incorporated in and constitute a part of the specification, illustrate embodiments of the invention, and together with the general description given above and the detailed description of the embodiments given below, serve to explain the principles of the invention.

A general architecture that implements the various features of the invention will now be described with reference to the drawings. The drawings and the associated descriptions are provided to illustrate embodiments of the invention and not to limit the scope of the invention. Throughout the drawings, reference numbers are re-used to indicate correspondence between referenced elements. In addition, the first digit of each reference number indicates the figure in which the element first appears.

FIG. 1 is a view showing a BCA (Burst Cutting Area) structure on an optical disc (read-only optical disc, WORM optical disc, or rewritable optical disc) according to an embodiment of the invention;

FIG. 2 is a view showing an example of the flow of an optical disc manufacturing method according to an embodiment of the invention;

FIG. 3 is a view showing the first example of a BCA pattern in the BCA formed on the optical disc according to an embodiment of the invention;

FIG. 4 is a view showing the second example of the BCA pattern in the BCA formed on the optical disc according to an embodiment of the invention;

FIG. 5 is a block diagram showing the schematic arrangement of the first example of a BCA recording apparatus (management information recording apparatus) according to an embodiment of the invention;

FIG. 6 is a block diagram showing the schematic arrangement of the second example of the BCA recording apparatus (management information recording apparatus) according to an embodiment of the invention;

FIG. 7 is a block diagram showing an example of a schematic arrangement of an optical disc apparatus which plays back the BCA pattern (management information) recorded in the BCA on the optical disc OD according to an embodiment of the invention;

FIG. 8 is a view for explaining an example of a motion of a beam spot in the BCA according to an embodiment of the invention;

FIG. 9 is a graph for explaining an example of a playback signal which is directly obtained from the BCA according to an embodiment of the invention;

FIG. 10 is a flowchart for explaining an example of a playback method of playing back the BCA pattern (management information) recorded in the BCA on the optical disc OD according to an embodiment of the invention; and

FIG. 11 is a graph for explaining an example of a playback signal from the BCA which has undergone filtering processing according to an embodiment of the invention.

### DETAILED DESCRIPTION OF THE INVENTION

An embodiment of the invention will be described below with reference to the accompanying drawing.

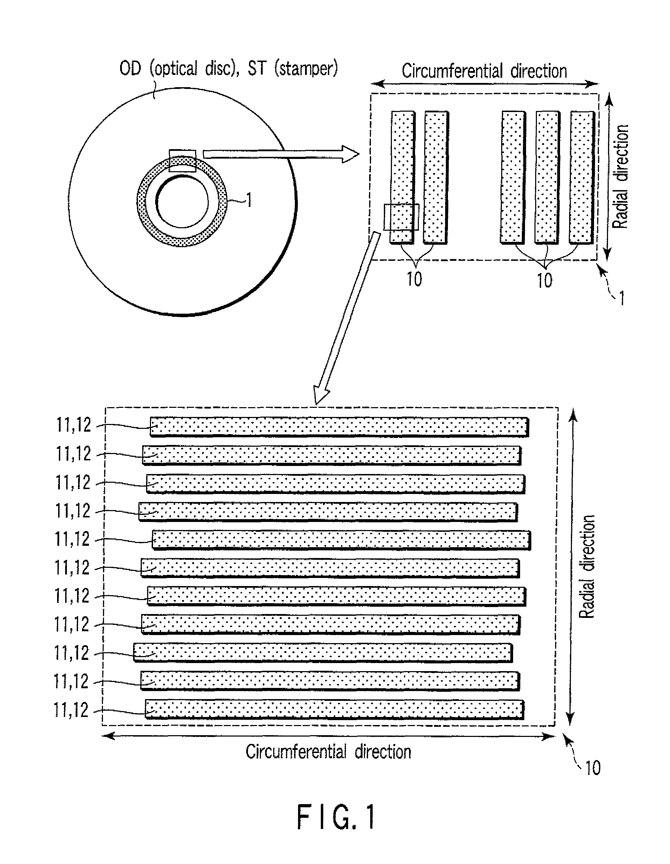

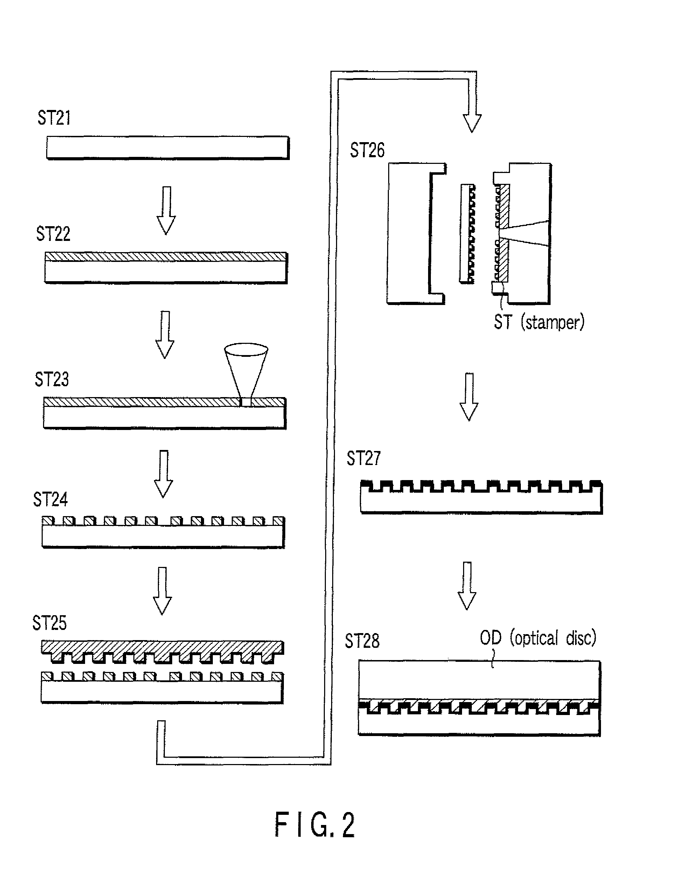

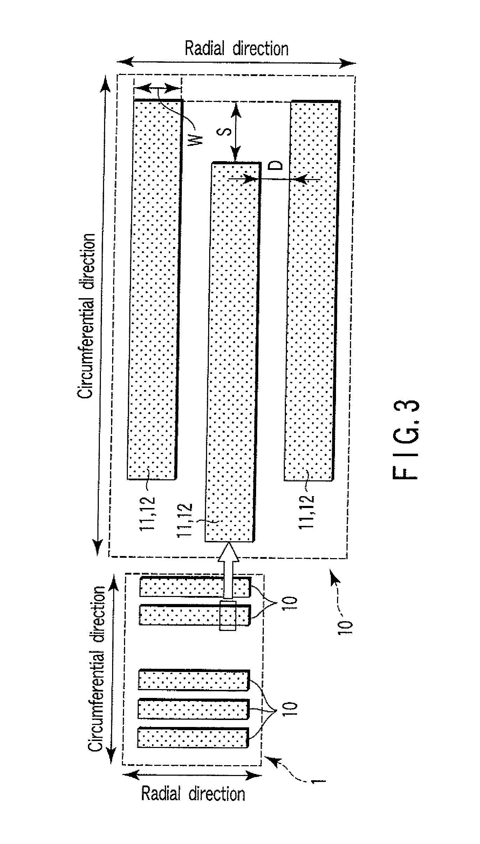

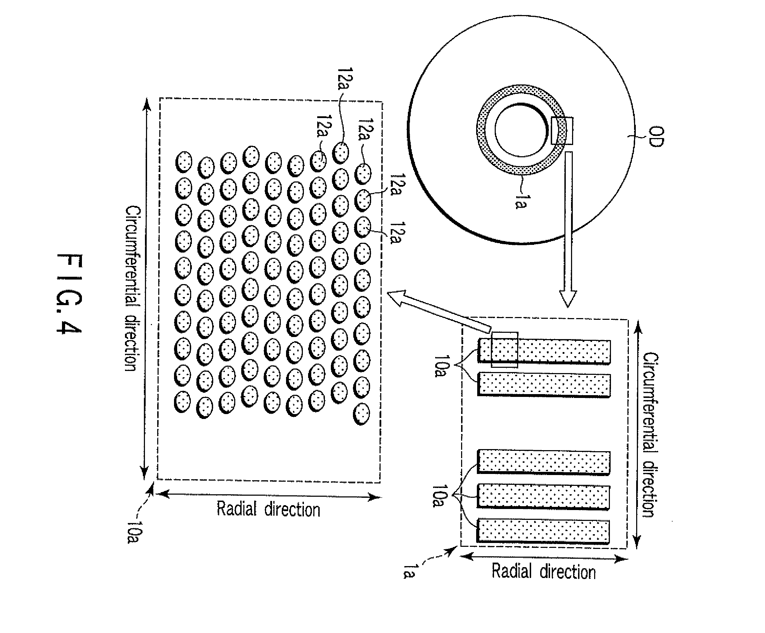

FIG. 1 is a view showing a BCA (Burst Cutting Area) structure on an optical disc (read-only optical disc, WORM optical disc, or rewritable optical disc) according to an embodiment of the invention. FIG. 2 is a view showing the flow of an optical disc manufacturing method. FIG. 3 is a view showing the first example of a BCA pattern in the BCA formed on the optical disc. FIG. 4 is a view showing the second example of the BCA pattern in the BCA formed on the optical disc. Note that from a different viewpoint, FIG. 1 is a view showing the BCA structure on a stamper according to the embodiment of the invention. Similarly, FIG. 3 is a view showing the first example of the BCA pattern in the BCA formed on this stamper. FIG. 4 is a view showing the second example of the BCA pattern in the BCA formed on this stamper. Note that the stamper is used to form the optical disc by press-molding.

When the disc is to be manufactured, disc unique information or management information is recorded in an optical disc OD in advance. The disc unique information is, e.g., copy protection information. For example, the copy protection information is used to identify each disc.

On the optical disc such as a CD, DVD, BD, or HD-DVD, the disc unique information or the management information is formed in advance as a barcode pattern in the BCA in the inner peripheral portion of the disc. In order to form on the disc the BCA in which the barcode pattern is formed, the barcode pattern to be formed in the BCA can be formed on the stamper serving as a mold tool when the optical disc is to be manufactured. Alternatively, in order to form the BCA, the barcode pattern can be formed upon burning out a reflecting film on the manufactured disc using a laser beam, or can be formed on a recording layer made of an inorganic material or an organic pigment on the manufactured disc.

The barcode pattern in the BCA is read as follows. First, the disc is rotated, and a laser beam from an optical disc recording/playback apparatus is focused on a disc surface. When the laser beam strikes the BCA, the barcode pattern in the BCA is reflected to the reflected light of this laser beam. That is, the barcode pattern in the BCA can be played back by detecting the reflected light of the laser beam.

For example, a laser beam spot diameter which is applied to a high-density optical disc such as the HD-DVD (next-generation DVD) is about 0.5 µm, while the width (in the circumferential direction) of one barcode in the BCA which is applied to the current-generation optical disc is about 10 µm. That is, the laser beam spot diameter is extremely small with respect to the width of the barcode pattern to be read out. Hence, the distortion of the playback signal of the barcode pattern can occur. For example, although the signal can be set at low level at the central portion of the barcode, the signal is undesirably set almost at high level since the laser beam spot is apart from a barcode edge.

Accordingly, in an embodiment of the invention, the BCA pattern is formed as follows. As shown in FIG. 1 or 3, the optical disc (information storage medium) OD includes a concentric BCA (management information area) 1. The BCA 1 has a plurality of elements 11, 12. In certain embodiments the elements 11, 12 can be grooves 11 formed in the circumferential and radial directions, or a plurality of marks 12 recorded in the circumferential and radial directions. Each of the marks 12 can have a convex or concave shape, or can be recorded by a phase change or a pigment change. The reflectance of the mark 12 can be lower than that of a portion other than the mark 12. Alternatively, the reflectance of the mark 12 can be higher than that of the portion other than the mark 12. The aggregate of the grooves 11 or the marks 12 aligned in the radial direction forms a BCA pattern (bar-like pattern) 10. The aggregate of the BCA patterns 10 aligned in the circumferential direction forms disc unique information or management information. In other words, the BCA 1 includes the plurality of BCA patterns 10 aligned in the circumferential direction, each of which has the aggregate of the plurality of grooves 11 or marks 12 aligned in the radial direction. The plurality of BCA patterns 10 aligned in the circumferential direction form the management information.

A width W (length in the radial direction) of the groove 11 or mark 12 satisfies 0.15 µm ≦ W ≦ 0.5 µm. A distance D between the grooves 11 or marks 12 (between edges) which are adjacent to each other in the radial direction satisfies D ≦ 0.5 µm. A deviation S in the circumferential direction between the grooves 11 or between the marks 12 which are adjacent to each other in the radial direction satisfies 0.5 µm ≦ S ≦ 5.0 µm. Note that the distance between the BCA patterns 10 adjacent to each other in the circumferential direction is sufficiently larger than the distance D between the grooves 11 or marks 12 (between edges) which are adjacent to each other in the radial direction. The BCA patterns 10 arranged at such distance intervals form the disc unique information or the management information.

As described above, the width of the groove 11 or the mark 12 and the distance between the grooves I 1 or marks 12 are determined in consideration of the beam spot diameter (about 0.5 µm). Accordingly, the distortion of the playback signal obtained when the optical disc recording/playback apparatus plays back the BCA 1 on the optical disc OD can be sufficiently suppressed.

In this embodiment, assume the HD-DVD (next-generation DVD). In this case, the optical disc OD has a diameter of 120 mm and a thickness of 1.2 mm (adhering two layers including a polycarbonate molded substrates each having a thickness of 0.6 mm), and the BCA is formed to have a ring shape with a radius of 22.3 to 23.1 mm. In order to record/play back this optical disc OD, recording/playback light having a wavelength of 405 nm is employed as recording/playback light, and an optical system having an NA of 0.65 is employed. Note that the optical disc OD in this embodiment is not limited to these numerical values.

With reference to FIG. 2, the optical disc OD manufacturing method will be described below. A master is made of glass, and has a surface which is polished and cleaned (ST21). A photoresist is applied to the surface of the master (ST22), and the photoresist surface is exposed to the laser beam and the like to record the information (ST23). Next, the exposed master is developed to form convex and concave portions such as the pits or grooves (ST24). After that, the master is plated to form a stamper ST (ST25). By using the stamper ST as a mold, the molded substrate made of a resin is formed by injection molding (ST26). On this substrate, a recording layer and a reflection layer are formed on a rewritable disc or a WORM disc, or only reflection layer is formed on a read-only disc (ST27). After that, these substrates are adhered to form the optical disc (ST28).

As the first method of forming the BCA 1 (grooves 11) on the optical disc, the grooves 11 are recorded in a master exposure step (ST23). In this method, individual information cannot be recorded on each disc. However, the stamper ST having the grooves 11 can be obtained by recording the grooves 11 on the master once. Accordingly, the BCA-recorded discs can be mass-produced by the stamper ST. That is, in this first method, the mass-productivity of the disc is improved.

As shown in FIG. 1 or 3, the stamper ST includes the concentric BCA (management information area) 1. The BCA 1 has the plurality of grooves 11 formed in the circumferential and radial directions. The aggregate of the grooves 11 aligned in the radial direction forms a BCA pattern 10. The aggregate of the BCA patterns 10 aligned in the circumferential direction forms management information. In other words, the BCA 1 includes the plurality of BCA patterns 10 aligned in the circumferential direction, each of which has the aggregate of the plurality of grooves 11 or marks 12 aligned in the radial direction. The plurality of BCA patterns 10 aligned in the circumferential direction form the management information.

The width W of the groove 11 satisfies 0.15 µm ≦ W ≦ 0.5 µm. The distance D between the grooves 11 (between edges) which are adjacent to each other in the radial direction satisfies D ≦ 0.5 µm. The deviation S in the circumferential direction between the grooves 11 which are adjacent to each other in the radial direction satisfies 0.5 µm ≦ S ≦ 5.0 µm. Note that the distance between the BCA patterns 10 adjacent to each other in the circumferential direction is sufficiently larger than the distance D between the grooves 11 (between edges) which are adjacent to each other in the radial direction. The BCA patterns 10 arranged at such distance intervals form the disc unique information or the management information.

As described above, the sizes, arrangement intervals, and the like of the grooves 11 are not extremely large, but adequate to a beam spot diameter of about 0.5 µm. In other words, the edge of the pattern appears in the beam spot. In an embodiment, the edge of the pattern always appears in the beam spot. With this arrangement, the distortion of the signal, e.g., the phenomenon in which the playback signal from the BCA 1 is undesirably set at high level although the signal can be set at low level can be suppressed.

Note that an upper limit value of 5.0 µm of the deviation S is obtained by converting an allowable deviation of 0.75 µs of the playback signal from the BCA 1 (the length at low level can be 1.56 ± 0.75 µs when the disc is rotated at 2,760 rpm) into distance. In this value range, the BCA 1 can be correctly played back even if the groove arrangement deviates. In addition, since the groove arrangement intentionally deviates, the edge of the pattern can appear in the beam spot as frequently as possible. Accordingly, the distortion of the playback signal can be suppressed.

As the second method of forming the BCA 1 (grooves 11 or marks 12) on the optical disc, the pattern of the grooves 11 or marks 12 is recorded in the BCA on the manufactured optical disc OD by a BCA recording apparatus (management information recording apparatus). In this method, the grooves 11 are formed by burning out the reflecting film of the disc using the laser beam from the BCA recording apparatus (read-only disc). Alternatively, the marks 12 are recorded on the recording layer on the disc using the laser beam from the BCA recording apparatus (rewritable disc or WORM disc). In this method, a long time is needed for recording information on each disc, and the productivity slightly decreases. However, individual information can be recorded on each disc. For example, it is suited to record the disc identification information which is effective for copy protection.

In addition to the above-described method, the BCA pattern shown in FIG. 4 is also available. That is, as shown in FIG. 4, the optical disc (information storage medium) OD includes a concentric BCA (management information area) 1a. The BCA 1a has a plurality of marks 12a formed in the circumferential and radial directions. The marks 12a are recorded by the phase change or the pigment change. The aggregate of the marks 12a aligned in the radial direction and some of the marks 12a aligned in the circumferential direction forms a BCA pattern (bar-like pattern) 10a. The aggregate of the BCA patterns 10a aligned in the circumferential direction forms the disc unique information or the management information. In other words, the BCA 1a includes the plurality of BCA patterns 10a aligned in the circumferential direction, each of which has the aggregate of the plurality of marks 12a aligned in the radial and circumferential directions. The plurality of BCA patterns 10a aligned in the circumferential direction form the management information.

The width W (length in the radial direction) of the mark 12a satisfies 0.15 µm ≦ W ≦ 0.5 µm. The distance D between the marks 12a (between edges) which are included in one BCA pattern 10a and adjacent to each other in the radial direction satisfies D ≦ 0.5 µm.

As described above, since the size of the groove 11 or the mark 12 or 12a is approximated to the size of beam spot diameter of the optical disc recording/ playback apparatus, the distortion of the playback signal from the BCA can be suppressed.

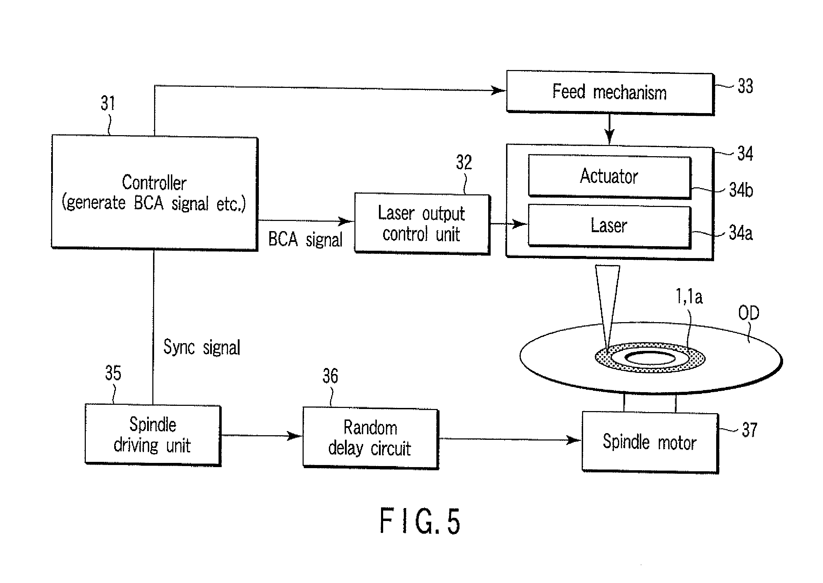

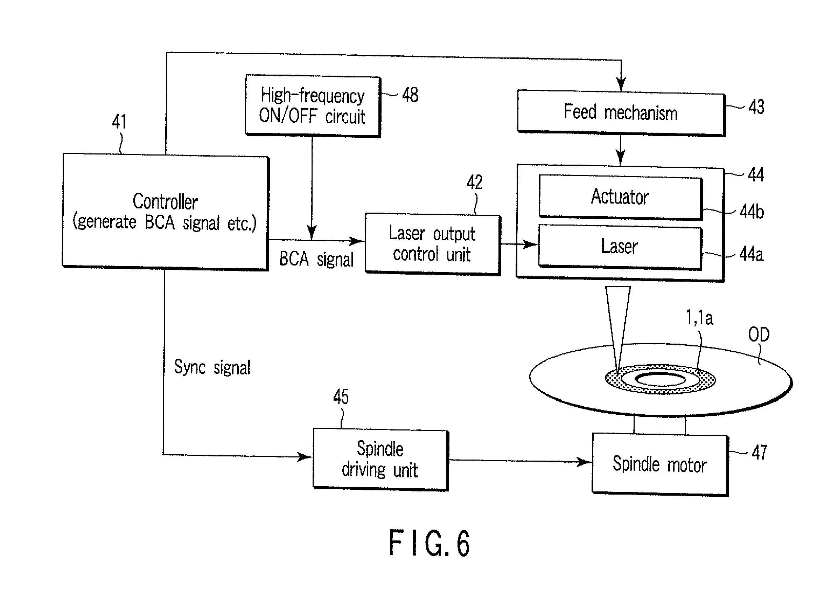

Next, with reference to FIGS. 5 and 6, the schematic arrangement of the BCA recording apparatus (management information recording apparatus) will be described. FIG. 5 is a block diagram showing the schematic arrangement of the first example of the BCA recording apparatus (management information recording apparatus). FIG. 6 is a block diagram showing the schematic arrangement of the second example of the BCA recording apparatus (management information recording apparatus).

As shown in FIG. 5, the BCA recording apparatus includes a controller 31, laser output control unit 32, feed mechanism 33, optical head 34, spindle driving unit 35, random delay circuit 36, and spindle motor 37.

The controller 31 generates a BCA signal corresponding to the BCA pattern, a feed mechanism control signal, and a sync signal. The laser output control unit 32 controls to drive a laser 34a included in the optical head 34, on the basis of the BCA signal. That is, the laser 34a irradiates the BCA with a laser beam corresponding to the BCA pattern. On the basis of the feed mechanism control signal, the feed mechanism 33 moves the optical head 34 in the radial direction of the disc. An actuator 34b included in the optical head 34 makes fine adjustment of the irradiation position of the beam spot using the laser 34a.

The spindle driving unit 35 generates a spindle driving signal on the basis of the sync signal. The random delay circuit 36 adds a random delay component to the spindle driving signal. The spindle motor 37 is rotated on the basis of the spindle driving signal having the random delay component. Upon rotation of the spindle motor 37, the optical disc OD is also rotated. As a result, the BCA pattern 10 or 10a shown in FIGS. 1, 3, and 4 can be formed on the disc.

As shown in FIG. 6, the BCA recording apparatus includes a controller 41, laser output control unit 42, feed mechanism 43, optical head 44, spindle driving unit 45, spindle motor 37, and high-frequency ON/OFF circuit 48.

The controller 41 generates the BCA signal corresponding to the BCA pattern, the feed mechanism control signal, and the sync signal. The high-frequency ON/OFF circuit 48 divides the BCA signal into a mark string. The laser output control unit 42 controls to drive a laser 44a included in the optical head 44, on the basis of the BCA signal. That is, the laser 44a irradiates the BCA with the laser beam corresponding to the BCA pattern. On the basis of the feed mechanism control signal, the feed mechanism 43 moves the optical head 44 in the radial direction of the disc. An actuator 44b included in the optical head 44 makes fine adjustment of the irradiation position of the beam spot using the laser driver 44a.

The spindle driving unit 45 generates a spindle driving signal on the basis of the sync signal. The spindle motor 47 is rotated on the basis of the spindle driving signal. Upon rotation of the spindle motor 47, the optical disc OD is also rotated. As a result, the BCA pattern 10 or 10a shown in FIGS. 1, 3, and 4 can be formed on the disc.

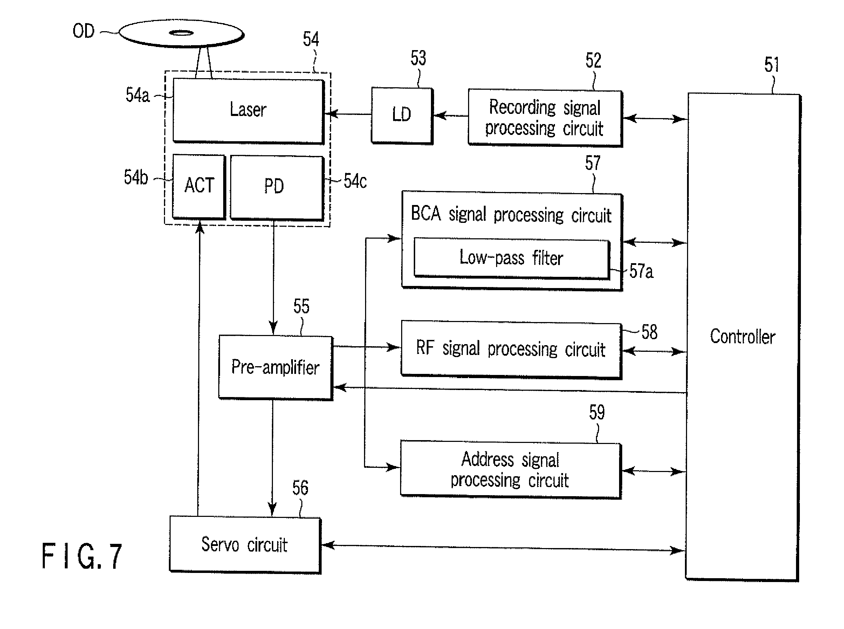

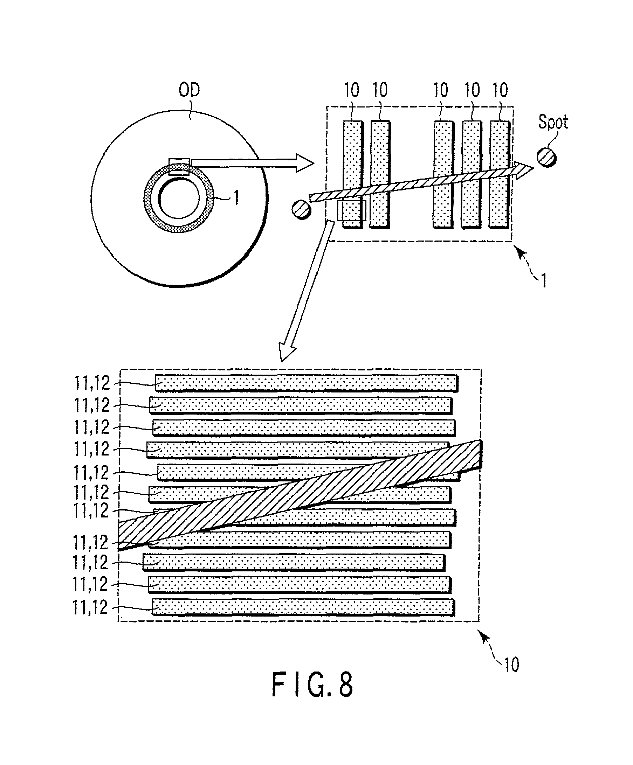

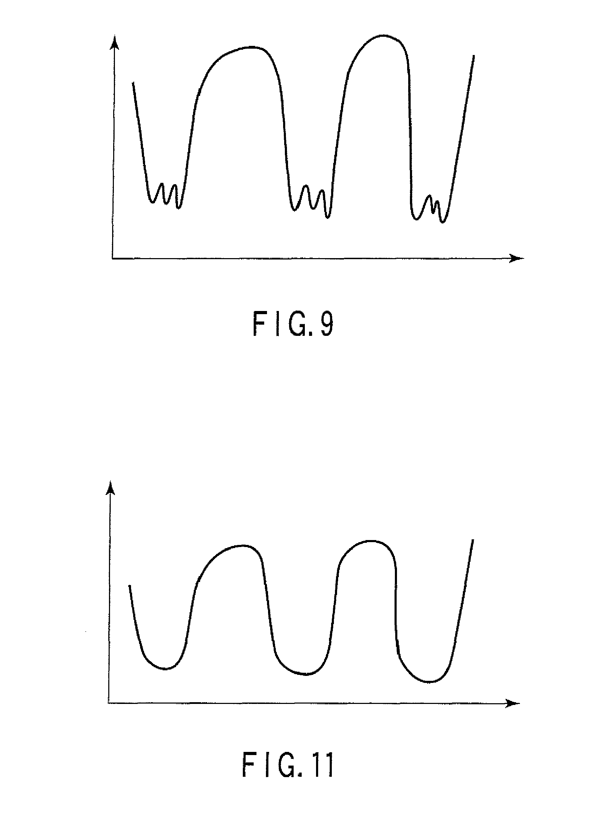

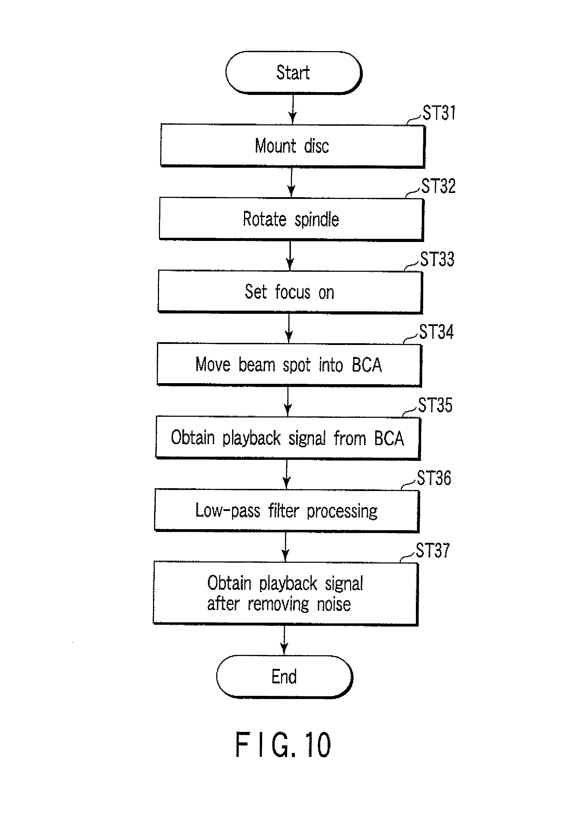

Next, with reference to FIGS. 7 to 11, playback of the BCA pattern (management information) recorded in the BCA on the optical disc OD will be described. FIG. 7 is a block diagram showing a schematic arrangement of an optical disc apparatus which plays back the BCA pattern (management information) recorded in the BCA on the optical disc OD. FIG. 8 is a view for explaining a motion of a beam spot in the BCA. FIG. 9 is a graph for explaining a playback signal which is directly obtained from the BCA. FIG. 10 is a flowchart for explaining a playback method of playing back the BCA pattern (management information) recorded in the BCA on the optical disc OD. FIG. I 1 is a graph for explaining a playback signal from the BCA which has undergone filtering processing.

As shown in FIG. 7, the optical disc apparatus includes a controller 51, recording signal processing circuit 52, laser driver (LD) 53, optical pick up head (PUH) 54, pre-amplifier 55, servo circuit 56, BCA signal processing circuit 57, RF signal processing circuit 58, and address signal processing circuit 59. The optical pick up head 54 also includes a laser 54a, actuator (ACT) 54b, and photodetector (PD) 54c.

When the information is to be recorded, the controller 51 outputs a recording signal. The recording signal processing circuit 52 modulates this recording signal. On the basis of the modulated recording signal, the laser driver (LD) 53 drives the laser 54a. Then, the laser 54a irradiates the optical disc with the laser beam corresponding to the recording signal. With this operation, the information is recorded on the optical disc OD.

When the information is to be played back, the laser driver (LD) 53 drives the laser 54a on the basis of the playback signal. Hence, the laser 54a irradiates the optical disc with a playback laser beam. By this irradiation, the reflected light from the optical disc is detected by the photodetector 54c. The photodetector 54c outputs a reflected light component as an electrical signal. Note that the photodetector 54c includes a plurality of light detection elements (e.g., four light detection elements). A signal obtained by adding the signal components detected by the respective light detection elements is called a sum signal, and a signal obtained by subtracting the signal components detected by some light detection elements from those detected by the remaining light detection elements is called a difference signal. The pre-amplifier 55 amplifies the electrical signal output from the photodetector 54c.

The servo circuit 56 generates a servo signal on the basis of a servo control signal from the controller 51 and the electrical signal which is detected by the photodetector 54c and amplified by the pre-amplifier. The actuator (ACT) 54b controls focus, tracking, and tilt on the basis of the servo signal.

The BCA signal processing circuit 57 processes the electrical signal (sum signal) which is detected by the photodetector 54c and amplified by the pre-amplifier, to play back the BCA pattern. The BCA signal processing circuit 57 includes the low-pass filter 57a to remove high-frequency component noise. The RF signal processing circuit 58 processes the electrical signal (sum signal) which is detected by the photodetector 54c and amplified by the pre-amplifier, to play back contents information. The address signal processing circuit 59 processes the electrical signal (sum signal) which is detected by the photodetector 54c and amplified by the pre-amplifier, to play back physical address information.

As shown in FIG. 8, when the BCA signal is played back, tracking control of a playback-light beam spot is not performed. Accordingly, the playback-light beam spot sometimes obliquely passes through the BCA pattern 10 or 10a in the BCA. With this operation, as shown in FIG. 9, in addition to the signal component of the BCA pattern, the playback signal directly obtained from the BCA includes a small signal as noise from the gap between the patterns. The low-pass filter 57a of the BCA signal processing circuit 57 shown in FIG. 7 removes this noise.

With reference to FIG. 10, playback of the BCA pattern will be summarized. First, the optical disc OD is mounted (ST31), the spindle motor 37 is rotated (ST32), the focus is set on (ST33), and the beam spot moves to the BCA (ST34). Hence, the playback signal is obtained from the BCA (ST35), and the playback signal undergoes the low-pass filter process (ST36), and the playback signal without high-frequency component noise shown in FIG. 11 can be obtained (ST37). Since this high-frequency component noise is removed, the BCA can be correctly played back.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information storage medium **characterized by** comprising:
a concentric management information area (1);
wherein a plurality of bar-like patterns (10, 10a) in a circumferential direction are formed in the management information area;
each of the bar-like patterns is formed by an aggregate of elements (11, 12, 12a); and
wherein the elements are dimensioned such that when an element is irradiated with a light beam at least one edge of the element is included within the light beam.

2. The medium of claim 1 **characterized in that** the element is a groove (11) or a mark (12, 12a).

3. The medium of claim 2 **characterized in that** the mark is a concave shape, a convex shape, an area of higher reflectivity, or an area of lower reflectivity.

4. The medium of claim 1 **characterized in that** the aggregate of the elements are aligned in a radial direction; and wherein the plurality of bar-like patterns aligned in the circumferential direction form management information.

5. The medium of claim 2, **characterized in that** a width W of the element satisfies 0.15 µm ≦ W ≦ 0.5 µm.

6. The medium of claim 2, **characterized in that** a distance D between the elements adjacent to each other in a radial direction satisfies D ≦ 0.5 µm.

7. The medium of claim 2, **characterized in that** a deviation S in the circumferential direction between the elements adjacent to each other in a radial direction satisfies 0.5 µm ≦ S ≦ 5.0 µm.

8. The medium of claim 1 **characterized in that** the aggregate of the elements is aligned in a radial direction and the circumferential direction, and wherein the plurality of bar-like patterns aligned in the circumferential direction form management information.

9. A stamper for forming an information storage medium by press-molding, **characterized by** comprising;
a management information stamp area (1) to form a concentric management information area by press-molding;
wherein the management information stamp area has a plurality of bar-like patterns (10) in a circumferential direction which include an aggregate of elements (11) aligned in a radial direction; and
the plurality of bar-like patterns aligned in the circumferential direction form management information.

10. The stamper of claim 9 **characterized in that** the element is a groove or a mark.

11. The stamper of claim 10 **characterized in that** the mark is a concave shape, a convex shape, an area of higher reflectivity, or an area of lower reflectivity.

12. The stamper of claim 10, **characterized in that** a width W of the element satisfies 0.15 µm ≦ W ≦ 0.5 µm.

13. The stamper of claim 10, **characterized in that** a distance D between the elements adjacent to each other in the radial direction satisfies D ≦ 0.5 µm.

14. The stamper of claim 10, **characterized in that** a deviation S in the circumferential direction between the elements adjacent to each other in the radial direction satisfies 0.5 µm ≦ S ≦ 5.0 µm.

15. A management information playback method for playing back management information from an information storage medium having a concentric management information area which includes a plurality of bar-like patterns in a circumferential direction, the plurality of bar-like patterns forming management information, each bar-like pattern having an aggregate of elements, wherein the elements are dimensioned such that when an element is irradiated with a light beam at least one edge of the element is included within the light beam, the method **characterized by** comprising:
irradiating the management information area with the light beam (ST33, ST34);
detecting reflected light of the light beam to form a detection signal (ST35); and
playing back the management information on the basis of the detection signal (ST36, ST37).

16. The method of claim 15 **characterized in that** the element is a groove or a mark.

17. The method of claim 16 **characterized in that** the mark is a concave shape, a convex shape, an area of higher reflectivity, or an area of lower reflectivity.

18. The method of claim 15, **characterized in that** a width W of the element satisfies 0.15 µm ≦ W ≦ 0.5 µm.

19. The method of claim 15, **characterized in that** a distance D between the elements adjacent to each other in a radial direction satisfies D ≦ 0.5 µm.

20. The method of claim 15, **characterized in that** a deviation S in the circumferential direction between the elements adjacent to each other in a radial direction satisfies 0.5 µm ≦ S ≦ 5.0 µm.
